# EUROPÄISCHE PATENTSCHRIFT

(11) **EP 3 621 754 B1**
(45) Veröffentlichungstag und Bekanntmachung des Hinweises auf die Patenterteilung: **14.06.2023**
(21) Anmeldenummer: 18713158.6
(22) Anmeldetag: 15.03.2018
(51) Int. Cl.: B21J 15/32, B23P 19/00, B21J 15/28, B65G 47/14

(54) **NIETELEMENTVERSORGUNGSEINHEIT**
RIVET ELEMENT SUPPLY UNIT
UNITÉ D'APPROVIONNEMENT EN ÉLÉMENTS DE RIVETAGE

(30) Priorität: 12.05.2017 DE 102017110408; 05.07.2017 DE 102017114971
(43) Veröffentlichungstag der Anmeldung: 18.03.2020
(73) Patentinhaber: Broetje-Automation GmbH, 26180 Rastede (DE)
(72) Erfinder: EUSTERWIEMANN, Christoph, 26121 Oldenburg (DE)
(74) Vertreter: Gottschald Patentanwälte Partnerschaft mbB
(86) Internationale Anmeldenummer: PCT/EP2018/056528
(87) Internationale Veröffentlichungsnummer: WO 2018/206184

(56) Entgegenhaltungen:
- EP-A1- 0 618 022
- EP-A2- 0 995 537
- DE-A1-102006 036 981
- DE-A1-102008 051 489
- US-A- 2 186 841
- US-A- 4 208 153

## Beschreibung

Die Erfindung betrifft eine Nietelementversorgungseinheit zur Bereitstellung von Nietelementen gemäß Anspruch 1, eine Fertigungsvorrichtung mit einer Nietmaschine gemäß Anspruch 12, eine Nietbeladestation gemäß Anspruch 17 sowie ein Verfahren zum Bereitstellen von Nietelementen gemäß Anspruch 20.

In der DE 10 2008 051 489 A1 ist ein Setzgerät mit einem Magazin und einem Bereitstellungsmodul für Fügeelemente mit einem Vibrationsförderer beschrieben.

Aus dem Stand der Technik ist es ferner bekannt, dass Nietelemente zum Befüllen einer Nietkassette von einer als Vibrationswendelförderer ausgebildeten Nietelementbereitstellungseinheit vereinzelt, ihre Ausrichtung geprüft und die Nietelemente dann einer Nietkassette zugeführt werden. Die Längsachse des Vibrationswendelförderers erstreckt sich dabei in Schwerkraftrichtung und die Wendel ist spiralförmig mit einem nach oben ansteigenden Radius ausgebildet.

Eine befüllte Nietkassette wird anschließend einem Nietmagazin einer Fertigungsvorrichtung zugeführt, von wo aus die Nietmaschine der Fertigungsvorrichtung mit Nietelementen versorgt wird.

Das Befüllen der Nietkassetten ist relativ aufwendig und erfolgt hier zumeist sequentiell. Wird die Art eines Nietelements, welches in die Nietkassetten gefüllt werden soll, geändert, muss die Nietbeladestation mechanisch auf die neuen Nietelemente eingestellt werden. Das Konzept der Bereitstellung der Nietelemente in Nietmagazinen erfordert eine umfangreiche Vorausplanung und Lagerung von Nietkassetten mit verschiedensten Nietelementen.

Der vorliegenden Erfindung liegt somit die Aufgabe zugrunde, ein einfaches, kostengünstiges und flexibles Versorgen einer Nietmaschine mit den benötigten Nietelementen zu ermöglichen.

Gelöst wird diese Aufgabe bei einer Nietelementversorgungseinheit mit den Merkmalen von Anspruch 1.

Durch das Vorsehen einer Nietelementversorgungseinheit mit einer Nietelementbereitstellungseinheit und einer Handhabungseinheit kann ein besonders einfaches und flexibles Versorgen der Nietmaschine mit den benötigten Nietelementen erreicht werden. Die Nietelementbereitstellungseinheit weist vorschlagsgemäß zum Fördern der Nietelemente einen Wendelförderer mit einer Längsachse und einer Wendel auf, welche sich um die Längsachse erstreckt. Um auch ein Vereinzeln auf besonders einfache Art und Weise zu ermöglichen, ist die Längsachse hier zur Schwerkraftrichtung geneigt, wodurch die Nietelemente durch ein Drehen der Wendel auf einfache Art und Weise gefördert und vereinzelt werden können. Ein Vibrationsantrieb ist für den Wendelförderer nicht notwendig.

Ferner weist die Nietbereitstellungseinheit einen Abgreifbereich auf, dem der Wendelförderer die Nietelemente zuführt. Von dem Abgreifbereich werden die Nietelemente zum Transport zu einer Nietelementaufnahme durch die Handhabungseinheit, insbesondere roboterbasiert, abgegriffen. Die Handhabungseinheit ermöglicht es, die Nietelemente so abzugreifen, dass diese ausgerichtet, insbesondere lagegesichert, der Nietelementaufhahme zugeführt werden können.

Bei der Weiterbildung gemäß Anspruch 2 kann die Nietelementversorgungseinheit mehrere Wendelförderer, vorzugsweise für verschiedene Nietelemente, aufweisen. Hierdurch ist die Handhabung und Bereitstellung von verschiedenen Nietelementen mit einer Nietelementversorgungseinheit auf ganz besonders einfache Art und Weise realisierbar.

Gemäß den Ansprüchen 3 und 4 kann die Nietelementversorgungseinheit einen Wendeltopf zur Aufnahme von Nietelementen aufweisen. Auf diese Weise kann die Nietelementversorgungseinheit durch das Einfüllen von Nietelementen in Form von Schüttgut in besagten Wendeltopf einfach befüllt werden. Der Wendeltopf kann somit sowohl zum Bevorraten von Nietelementen in Form von Schüttgut als auch zum Vereinzeln der Nietelemente genutzt werden.

Gemäß den Ansprüchen 5 und 6 kann der Wendeltopf in der Nietelementversorgungseinheit von einer Wendeltopfaufnahme aufgenommen und, insbesondere lösbar, in dieser angeordnet sein. Über eine Kupplung kann dann bevorzugt eine Drehbewegung von einem Motor auf den Wendeltopf übertragen werden. In diesem Fall kann der Wendeltopf einfach zum Nachfüllen von Nietelementen entnommen werden und/oder einfach gegen einen anderen ausgetauscht werden.

In den Unteransprüchen 7 bis 9 sind bevorzugte Weiterbildungen der Nietelementbereitstellungseinheit beschrieben.

Gemäß Anspruch 10 ist die Handhabungseinheit ein Roboter. Dieser ermöglicht ein ganz besonders einfaches Aufnehmen und Ausrichten der Nietelemente, so dass diese ausgerichtet einer Nietelementaufnahme zugeführt werden können.

Gemäß Anspruch 11 kann die Nietelementversorgungseinheit eine Steuerung zur Steuerung der Nietelementbereitstellungseinheit und/oder der Handhabungseinheit aufweisen. In Verbindung mit einer Sensoranordnung ist so beispielsweise das Erfassen der Position und/oder der Ausrichtung der Nietelemente im Abgreifbereich möglich.

Darüber hinaus wird die eingangs genannte Aufgabe bei einer Fertigungsvorrichtung mit einer Nietmaschine durch die Merkmale von Anspruch 12 gelöst.

Es ergeben sich die gleichen Vorteile wie vorstehend im Zusammenhang mit der Nietelementversorgungseinheit beschrieben.

Eine bevorzugte Ausgestaltung der Nietmaschine ist in Anspruch 13 beschrieben, wonach die Nietmaschine eine Verstelleinheit und einen Endeffektor aufweist, wobei der Endeffektor ein Nietwerkzeug aufweist.

Gemäß der bevorzugten Ausgestaltung nach Anspruch 14 nimmt die Nietelementaufnahme die Nietelemente ausgerichtet auf und/oder weist einen Zwischenspeicher auf.

Bevorzugte Formen der Ausbildung der Transportstrecke von der Nietelementaufnahme zur Nietmaschine, welche einen besonders einfachen Transport der Nietelemente ermöglichen, sind in den Ansprüchen 15 und 16 beschrieben.

Darüber hinaus wird die eingangs beschriebene Aufgabe bei einer Nietbeladestation durch die Merkmale von Anspruch 17 gelöst.

Es ergeben sich die gleichen Vorteile wie vorstehend bereits im Zusammenhang mit der Nietelementversorgungseinheit bzw. der Fertigungsvorrichtung beschrieben.

Bevorzugte Ausgestaltungen der Nietbeladestation sind in den Ansprüchen 18 und 19 beschrieben.

Schließlich wird die eingangs genannte Aufgabe durch ein Verfahren zum Bereitstellen von Nietelementen mit den Merkmalen von Anspruch 20 gelöst.

Es ergeben sich die gleichen Vorteile wie vorstehend im Zusammenhang mit der Nietelementversorgungseinheit, der Fertigungsvorrichtung bzw. der Nietbeladestation beschrieben. Für die Durchführung des Verfahrens wird vorzugsweise die beschriebene Nietelementversorgungseinheit, die beschriebene Fertigungsvorrichtung oder die beschriebene Nietbeladestation verwendet.

Im Folgenden wird die Erfindung anhand einer lediglich ein Ausführungsbeispiel darstellenden Zeichnung näher erläutert. In der Zeichnung zeigt
- Fig. 1: eine schematische Darstellung einer vorschlagsgemäßen Fertigungsvorrichtung zur Durchführung eines vorschlagsgemäßen Verfahrens in a) einer Seitenansicht und b) einer Draufsicht,
- Fig. 2: eine dreidimensionale Darstellung eines Teils der vorschlagsgemäßen Nietelementversorgungseinheit gemäß Blickrichtung II aus Fig. 1 sowie einer Nietelementaufnahme der Fertigungsvorrichtung,
- Fig. 3: a) eine dreidimensionale Darstellung eines Teils der vorschlagsgemäßen Nietelementversorgungseinheit gemäß der Blickrichtung III aus Fig. 1 und in b) einen Schnitt gemäß A-A aus Fig. 3a,
- Fig. 4: eine schematische Darstellung einer vorschlagsgemäßen Nietbeladestation zur Durchführung eines vorschlagsgemäßen Verfahrens in a) einer Seitenansicht und b) einer Draufsicht und
- Fig. 5: eine schematische Darstellung eines weiteren Ausführungsbeispiels einer vorschlagsgemäßen Nietelementversorgungseinheit zur Durchführung eines vorschlagsgemäßen Verfahrens a) in einer Seitenansicht und b) in einer perspektivischen Ansicht.

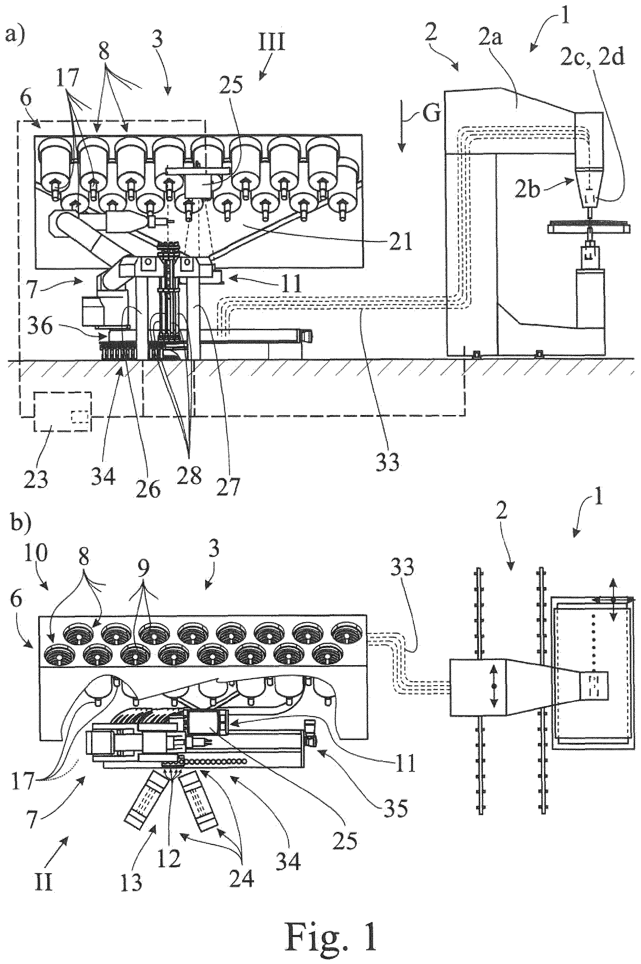

In Fig. 1 ist eine vorschlagsgemäße Fertigungsvorrichtung 1 gezeigt. Die Fertigungsvorrichtung 1 weist eine Nietmaschine 2 und eine Nietelementversorgungseinheit 3 auf.

Im Ausführungsbeispiel dient die Nietmaschine 2 zur Bearbeitung von Strukturbauteilen 4, insbesondere Flugzeugstrukturbauteilen, beispielsweise einer Rumpfsektion und/oder einer Außenhautsektion eines Flugzeugs.

Die Nietmaschine 2 weist vorzugsweise, wie in der Fig. 1 gezeigt, eine Verstelleinheit 2a mit einem Endeffektor 2b auf. Der Endeffektor 2b weist ein Nietwerkzeug 2c zum Setzen von Nietelementen 5 in ein Strukturbauteil 4 und ggf. ein Bohrwerkzeug 2d zum Bohren eines Lochs in ein Strukturbauteil 4 auf. In ein von dem Bohrwerkzeug 2d gebohrtes Loch kann das Nietwerkzeug 2c dann ein Nietelement 5 einsetzen.

Die vorschlagsgemäße Nietelementversorgungseinheit 3 weist zur Bereitstellung von Nietelementen 5 eine Nietelementbereitstellungseinheit 6 und eine Handhabungseinheit 7 auf.

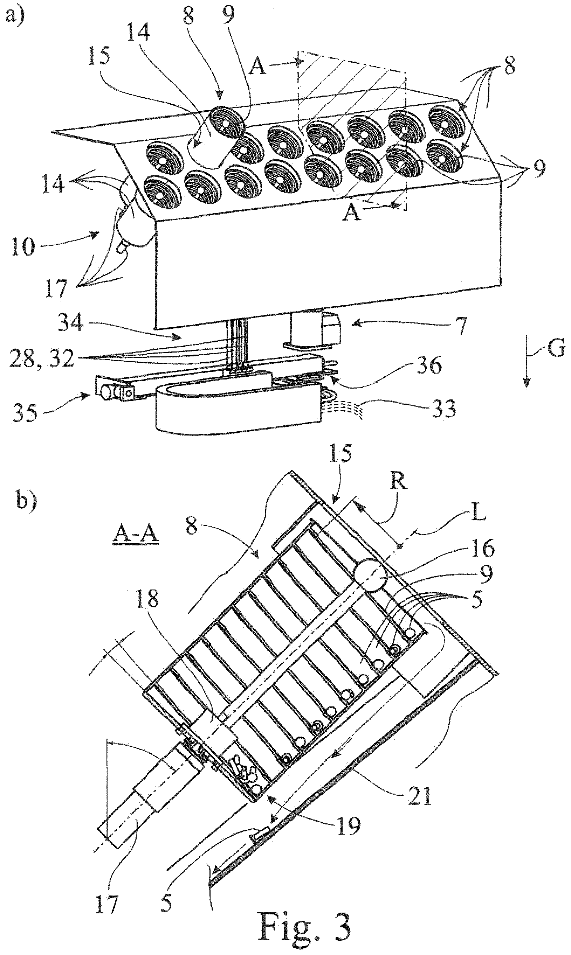

Zum Fördern der Nietelemente 5 weist die Nietelementbereitstellungseinheit 6 einen Wendelförderer 8 auf. Der Wendelförderer 8 hat eine Wendel 9 und eine Längsachse L, um welche sich die Wendel 9 erstreckt. Im normalbetriebsgemä-ßen Gebrauch ist der Wendelförderer 8 derart angeordnet, dass die Längsachse L wie in den Figuren 1 und 3 gezeigt zur Schwerkraftrichtung G geneigt ist.

Insbesondere um Nietelemente 5 unterschiedlichsten Typs und/oder unterschiedlichster Gattung bereitzustellen, kann die Nietelementbereitstellungseinheit 6 mehrere Wendelförderer 8 aufweisen, wie dies auch in dem Ausführungsbeispiel der Fall ist. Sind mehrere Wendelförderer 8 vorgesehen, bilden diese eine Wendelfördereranordnung 10. Auch bei den weiteren Wendelförderern 8 erstreckt sich deren Wendel 9 vorzugsweise um ihre jeweilige Längsachse L. Dabei sind vorzugsweise die Längsachsen L mindestens zweier, vorzugsweise aller Wendelförderer 8 zur Schwerkraftrichtung G geneigt. Hier sind, wie in der Fig. 1 bzw. 3 gut zu erkennen, die Längsachsen L der Wendelförderer 8 im Wesentlichen parallel zueinander ausgerichtet Es ergibt sich eine ganz besonders kompakte Anordnung. Besonders bevorzugt sind die Wendelförderer 8 einer Nietelementbereitstellungseinheit 6 im Wesentlichen baugleich ausgebildet.

Die Längsachse L bzw. die Längsachsen L verlaufen hier in einem Winkel von 15° bis 75°, vorzugsweise von 30° bis 60°, weiter vorzugsweise von 40° bis 50°, zu der Schwerkraftrichtung G.

Der Steigungswinkel der Wendel beträgt hier unter 20°, weiter vorzugsweise unter 10°. Besonders bevorzugt beträgt der Steigungswinkel zwischen 2,5° und 7,5°. Im Ausführungsbeispiel sind es 5°.

Ferner weist die Nietelementbereitstellungseinheit 6 vorschlagsgemäß einen Abgreifbereich 11 auf, dem der Wendelförderer 8 Nietelemente 5 zuführt.

Die Handhabungseinheit 7 transportiert, hier und vorzugsweise roboterbasiert, die Nietelemente 4 von dem Abgreifbereich zu einer Nietelementaufnahme 12. Die Nietelementversorgungseinheit 3 kann die Nietelemente 5 so besonders flexibel einer Nietelementaufnahme 12, insbesondere ausgerichtet, zuführen. Wie im Ausführungsbeispiel gezeigt können auch mehrere Nietelementaufnahmen 12 vorgesehen sein. Diese bilden dann eine Nietelementaufnahmeanordnung 13.

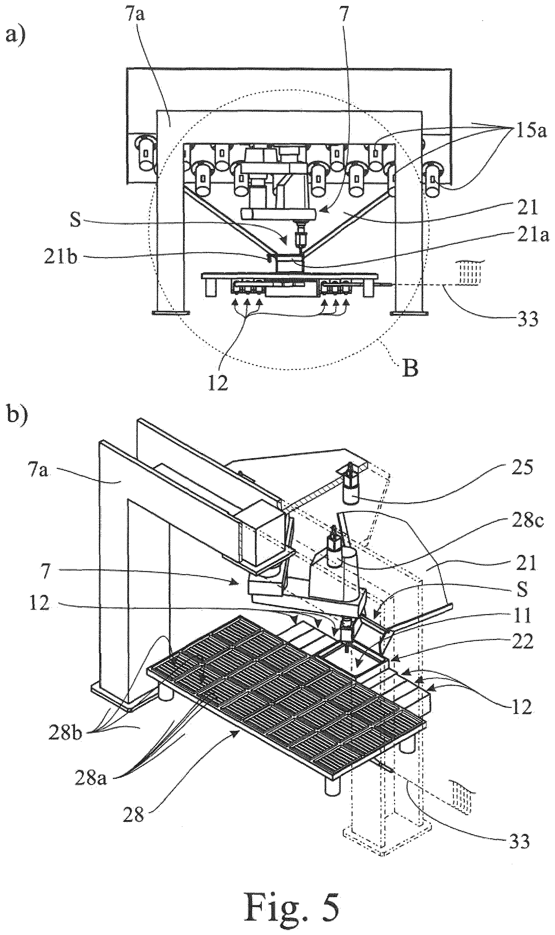

Um eine besonders flexible Zuführung zu ermöglichen, kann die Handhabungseinheit 7 ein Roboter sein. Bei dem Roboter handelt es sich hier und vorzugsweise um einen Roboter mit mindestens zwei oder mindestens drei Achsen. Der Roboter kann auch vier oder mehr Achsen aufweisen. Besonders bevorzugt weist der Roboter mindestens zwei oder mindestens drei Rotationsachsen auf. Besonders bevorzugt handelt es sich bei dem Roboter um einen Industrieroboter, insbesondere einen Scara-Roboter (Selective Compliance Assembly Robot Ann). Er wird auch als "horizontaler Gelenkarmroboter" bezeichnet. Im Ausführungsbeispiel der Fig. 5 ist dieser hängend an einem, insbesondere feststehenden, Portal 7a befestigt.

Dadurch, dass ein Roboter die Nietelemente 5 hier und vorzugsweise aus der Nietelementbereitstellungseinheit 6 entnimmt und einer Nietelementaufnahme 12 zuführt, können viele verschiedene Nietelemente 5 auf einfache Art und Weise gehandhabt und der Nietelementaufnahme 12 bzw. den Nietelementaufnahmen 12, insbesondere ausgerichtet, zugeführt werden. Die Nietelementaufnahme 12 kann die Nietelemente 5 dann ausgerichtet, insbesondere lagegesichert, aufnehmen.

Werden die Nietelemente 5 ausgerichtet der Nietelementaufnahme 12 zugeführt, muss ihre Ausrichtung nicht mehr vor der Aufnahme in die Nietelementaufnahme 12 geprüft werden und im Falle einer Falschausrichtung müssen diese somit auch nicht gedreht oder zu der Nietelementbereitstellungseinheit 6 zurückgeführt werden.

Bei den Nietelementen 5 kann es sich beispielsweise um Nieten 5a und/oder Nietcollare 5b und/oder Spacer 5c handeln.

Vorzugsweise können mit der Handhabungseinheit 7 Nieten 5a unterschiedlicher Gattung, insbesondere unterschiedlichen Typs, und/oder unterschiedlicher Nennlänge und/oder unterschiedlichen Nenndurchmessers ohne Veränderung der mechanischen Konfiguration der Nietelementversorgungseinheit 3 einer der bzw. den Nietelementaufnahmen 12 zugeführt werden. Der Typ eines Nietelements 5 unterscheidet sich insofern von dessen Gattung, als dass die Gattung die Art des Nietes 5a, Nietcollars 5b, und/oder Spacers 5c bestimmt, sich hinsichtlich der Dimension seiner Merkmale, insbesondere hinsichtlich seiner Nennmaße, jedoch nicht festlegt. Der Typ eines Nietelements 5 spezifiziert nicht nur die Gattung, sondern auch die Nennmaße des Nietelements 5, also insbesondere den Nenndurchmesser und die Nennlänge.

Zusätzlich oder alternativ können Nietcollare 5b unterschiedlicher Gattung, insbesondere unterschiedlichen Typs, und/oder unterschiedlicher Nennlänge und/oder unterschiedlichen Nenndurchmessers durch die Handhabungseinheit 7 ohne Veränderung der mechanischen Konfiguration der Nietelementversorgungseinheit 3 einer der bzw. den Nietelementaufnahmen 12 zugeführt werden.

Es ist vorzugsweise also auch möglich, Nieten 5a und Nietkollare 5b durch die Handhabungseinheit 7 ohne Veränderung der mechanischen Konfiguration der Nietelementversorgungseinheit 3 einer der bzw. den Nietelementaufnahmen 12 zuzuführen.

Das gleiche gilt hier und vorzugsweise auch für Spacer 5c. Auch Spacer 5c unterschiedlicher Gattung, insbesondere unterschiedlichen Typs, und/oder unterschiedlicher Nennlänge und/oder unterschiedlichen Nenndurchmessers können durch die Handhabungseinheit 7 ohne Veränderung der mechanischen Konfiguration der Nietelementversorgungseinheit 3 einer der bzw. den Nietelementaufnahmen 12 zugeführt werden.

Dabei kann es sich um die Nietelementaufnahme 12 einer vorschlagsgemäßen Fertigungseinrichtung 1 und/oder eine Nietelementaufnahme 12 einer Nietelementkassette und/oder einer Nietelementaufnahme 12 einer Nietkassettenaufnahme handeln. In den beiden letzteren Fällen bildet die Nietelementversorgungseinheit 3 vorzugsweise gemeinsam mit der Nietelementkassette und/oder Nietelementkassettenaufnahme eine vorschlagsgemäße Nietbeladestation 1a.

Die Kombination der Nietbereitstellungseinheit 6 mit einem Wendelförderer 8 in Verbindung mit der Handhabungseinheit 7 ermöglicht ein besonders flexibles Zuführen von Nietelementen 5 zu einer Nietelementaufnahme 12. Der Wendelförderer 8 ermöglicht ein ganz besonderes einfaches Vereinzeln und Zuführen zum Abgreifbereich 11 während die Handhabungseinheit 7 die Nietelemente 5, insbesondere unterschiedlichster Gattung oder unterschiedlichsten Typs, dann der Nietelementaufnahme 12 ausgerichtet zuführen kann. Die Nietelementaufnahme 12 kann diese dann ausgerichtet, insbesondere lagegesichert, aufnehmen. Eine mechanische Konfigurationsänderung der Nietelementversorgungseinheit 3 zur Adaption an andere Nietelemente 5 ist nicht notwendig.

Eine vergrößerte Darstellung eines Wendelförderers 8 kann der Fig. 3b gemäß dem Schnitt A-A entnommen werden. Der Wendelförderer 8 weist einen Wendeltopf 14 zur Aufnahme von Nietelementen 5 auf. In diesem ist die Wendel 9 angeordnet. Der Wendeltopf 14 ist hier und vorzugsweise im Wesentlichen zylindrisch ausgebildet. Besonders bewährt hat es sich, wenn der Wendeltopf 14 und die Wendel 9 einstückig ausgebildet sind und/oder die Wendel 9 im Wesentlichen einen konstanten Radius R aufweist, wie dies im Ausführungsbeispiel der Fall ist.

Der Wendeltopf 14 ermöglicht es, dem Wendelförderer 8 Nietelemente 5 in Form von Schüttgut zuzuführen. Dieses kann dann im Bodenbereich des Wendelförderers 8 bevorratet - Bevorratungsbereich - werden. Durch die Rotation der Wendel 9 können die Nietelemente 5 von der Wendel 9 aus dem Bevorratungsbereich in Richtung Einlassöffnung 14a des Wendelförderers 8 transportiert werden. Dabei gleiten die Nietelemente 5 auf der Wendel 9 ab. Zudem werden die Nietelemente 5 hierbei auf der Wendel 9, zumindest in Gruppen, vereinzelt.

Wie in der Fig. 3a gezeigt, weist der Wendelförderer 8 eine Wendeltopfaufnahme 15 zur Aufnahme des Wendeltopfes 14 auf. Hier und vorzugsweise ist der Wendeltopf 14, insbesondere werkzeuglos, lösbar in der Wendeltopfaufnahme 15 angeordnet. Hier kann er einfach, wie in der Fig. 3 gezeigt, in die Wendeltopfaufnahme 15 eingesteckt bzw. herausgezogen werden. Dies ermöglicht ein besonders einfaches Nachfüllen von Nietelementen 5. Der Wendeltopf 14 kann einfach entnommen und dann mit Nietelementen 5 befüllt werden. Danach kann er wieder in die Wendeltopfaufnahme 15 eingesetzt werden. Alternativ kann der Wendeltopf 14 auch gegen einen weiteren, bereits befüllten Wendeltopf 14, getauscht werden. Dies ermöglicht ein noch zügigeres Nachfüllen der Nietbereitstellungseinheit 6 mit Nietelementen 5.

Ferner kann der Wendelförderer 8, vorzugsweise eine Wendeltopfaufnahme 15, weiter vorzugsweise die Mehrheit der Wendeltopfaufnahmen 15, weiter vorzugsweise jede Wendeltopfaufnahme 15, einen Wendeltopfsensor 15a aufweisen, welcher erkennt, ob ein Wendeltopf 14 aufgenommen ist und/oder welche Nietelemente 5 sich im Wendeltopf 14 befinden. Diese Erkennung erfolgt hier und vorzugsweise über eine Kennzeichnung des Wendeltopfes 14, welche der Wendeltopfsensor 15a sensiert. Hierbei kann es sich beispielsweise um einen Barcode, QR-Code und/oder einen RFID-Chip handeln.

Um das Entnehmen des Wendeltopfes 14 zu erleichtern, weist der Wendeltopf 14 einen Griff 16 zum Greifen und Herausnehmen des Wendeltopfes 14 aus bzw. Einführen des Wendeltopfes 14 in die Wendeltopfaufnahme 15 auf. Hier ist der Griff 16 auf der Längsachse L des Wendelförderers 14 im Wendeltopf 14 angeordnet. Er ist als Kugelkopf ausgestaltet.

Zur Übertragung einer Drehbewegung von einem Antrieb 17 auf den Wendeltopf 14 bzw. die Wendeltöpfe 14 kann eine Kupplung 18 vorgesehen sein. Bei der Kupplung 18 handelt es sich hier und vorzugsweise um eine Klauenkupplung, welche insbesondere auch als Steckkupplung ausgebildet ist. Hierzu weist der Wendeltopf 14 eine Klaueneinheit und die Wendeltopfaufnahme 15 eine korrespondierende Klaueneinheit der Kupplung 18 auf.

Hier und vorzugsweise weist jeder Wendelförderer 8 einen eigenen Antrieb 17 auf. Entsprechend können sämtliche Wendelförderer 8 hier und vorzugsweise einzeln angesteuert und angetrieben werden. Alternativ ist es jedoch auch denkbar, dass ein Antrieb 17 für mehrere Wendelförderer 8 vorgesehen ist. In diesem Fall kann die Antriebskraft eines Antriebs 17 beispielsweise mittels eines Riemens, Zahnriemens o. dg1. vom Antrieb 17 auf mehrere Wendelförderer 8 übertragen werden.

Durch das Antreiben des Wendeltopfes 14 wird auch die Wendel 9 gedreht. Das Drehen der Wendel 9 bewirkt, dass die Nietelemente 5 aus dem Bevorratungsbereich 19 des Wendeltopfes 14 durch die Wendel 9 in Richtung der Öffnung des Wendeltopfes 14 gefördert werden. Hier und vorzugsweise befindet sich die Öffnung des Wendeltopfes 14 auf der oberen Stirnseite desselben. Auf dem Förderweg im Wendeltopf 14 werden die Nietelemente 5, insbesondere in kleine Gruppen, vereinzelt. Hierdurch ist durch Drehen des Wendeltopfes 14 ein insbesondere einzelnes Abwerfen der Nietelemente 5, hier und vorzugsweise über eine Abwurfkante des Wendeltopfes 14, aus dem Wendeltopf 14 möglich.

Hier, und wie insbesondere in der Fig. 3 zu sehen, werden die Nietelemente 5 durch die Wendel 9 aus dem Wendelförderer 8 gefördert. Hier weist die Wendeltopfaufnahme 15 eine Öffnung 20 zum Zuführen der Nietelemente 5 zum Abgreifbereich auf. Durch diese Öffnung 20 fallen die Nietelemente 5 aus dem Wendelförderer 8 heraus. Hier und vorzugsweise ist dann eine Rutsche 21 vorgesehen, über welche die Nietelemente 5 zum Abgreifbereich 11 rutschen. Insofern wird durch eine Drehung der Wendel 9 ein Nietelement 5 vom Wendelförderer 8 durch das Abwerfen desselben und Rutschen über die Rutsche 21 dem Abgreifbereich 11 zugeführt.

Wie beispielhaft in der Fig. 5 gezeigt, kann vor dem Abgreifbereich 11 ein Nietelementsammelbereich S vorgesehen sein. In diesem können Nietelemente 5 vor dem Vereinzeln im Abgreifbereich 11 zum Abgreifen durch die Handhabungseinheit 7 gesammelt werden, um diese gemeinsam dem Abgreifbereich 11 zuzuführen. Im Ausführungsbeispiel weist der Nietelementsammelbereich S eine Klappe 21a auf. Diese kann hier mittels eines Aktuators 21b betätigt werden. Hier weist die Rutsche 21 die Klappe 21a und den Aktuator 21b auf. Durch das Sammeln und gemeinsame Zuführen der Nietelemente 5 zum Abgreifbereich 11 können auf besonders einfache Art und Weise die Nietelemente 5 zügig dem Abgreifbereich 11 zugeführt und dort vereinzelt und abgegriffen werden. Das Sammeln der Nietelemente 5 erfolgt hier durch die geschlossene Klappe 21a und/oder das gemeinsame Zuführen der gesammelten Nietelemente 5 zum Abgreifbereich 11 durch das Öffnen der Klappe 21a.

Vorzugsweise werden dem Abgreifbereich 11 Nietelemente 5 von mehreren, vorzugsweise allen Wendelförderern 8, zugeführt. Hier und vorzugsweise werden die Nietelemente 5 über eine gemeinsame Rutsche 21 dem Abgreifbereich 11 zugeführt. Es können jedoch auch mehrere Rutschen 21 von verschiedenen Wendelförderern 8 zu dem Abgreifbereich 11 vorgesehen sein. Vorzugsweise fördern jedoch mehrere Wendelförderer 8 Nietelemente 5 zu dem Abgreifbereich 11.

Zusätzlich oder alternativ zu der Öffnung 20 der Wendeltopfaufnahme 15 kann auch der Wendeltopf 14 eine Öffnung zum Zuführen der Nietelemente 5 zum Abgreifbereich 11 aufweisen.

Der Abgreifbereich 11 wird hier und vorzugsweise von einem Rütteltisch 22 gebildet. Dieser gewährleistet auch für den Fall, dass mehrere Nietelemente 5 gleichzeitig dem Abgreifbereich 11 zugeführt werden, ein sicheres Abgreifen durch die Handhabungseinheit 7. Ggf. können im Abgreifbereich 11 nicht vereinzelte liegende Nietelemente 5 durch Rüttelbewegungen separiert bzw. weiter vereinzelt werden.

Ferner kann eine Steuerung 23 zur Steuerung der Nietelementbereitstellungseinheit 6 und/oder der Handhabungseinheit 7 vorgesehen sein. Die Steuerung 23 kann dabei zentral oder dezentral ausgebildet sein, also entweder eine zentrale Steuereinheit aufweisen oder mehrere dezentrale Steuereinheiten aufweisen. Insbesondere kann die Steuerung 23 auch durch die Nietmaschine 2 bereitgestellt werden.

Die Steuerung 23 erfasst mittels einer Sensoranordnung 24, insbesondere eines optischen Sensors 25, die Position und/oder Ausrichtung der Nietelemente 5 im Abgreifbereich 11. Der optische Sensor 25 ist vorzugsweise in Schwerkraftrichtung G über dem Abgreifbereich 11 angeordnet, insbesondere ortsfest.

Zusätzlich oder alternativ kann die Sensoranordnung 24 auch eine oder mehrere Prüfeinheiten 26, 27 aufweisen, welche weiter unten näher beschrieben werden. Vorzugsweise wird auch die Sensoranordnung 24 und damit ggf. der optische Sensor 25 bzw. die Prüfeinheit 26, 27 hier von der Steuerung 23 gesteuert.

Mittels des optischen Sensors 25 kann die Steuerung 23 im Ausführungsbeispiel die Position und/oder Ausrichtung der Nietelemente 5 im Abgreifbereich 11 erfassen.

Zum Abgreifen der Nietelemente 5 steuert die Steuerung 23 basierend auf der Position und/oder der Ausrichtung der Nietelemente 5 die Handhabungseinheit 7 zur Aufnahme, insbesondere zum Greifen, eines Nietelements 5 an. Unter Ausrichtung ist hier und vorzugsweise die Orientierung der Längsachse des Nietelements 5, insbesondere einschließlich der Orientierung seines Nietkopfes 5d, zu verstehen. Die Handhabungseinheit 7 kann dann korrespondierend zur Position und Ausrichtung des Nietelements 5 so verstellt werden, dass sein Greifer das Nietelement 5 aufnehmen kann.

Die Steuerung 23 kann mittels der Sensoranordnung 24, insbesondere des optischen Sensors 25, die Gattung, vorzugsweise den Typ, eines von der Nietelementbereitstellungseinheit 6 bereitgestellten, insbesondere im Abgreifbereich 11 liegenden, Nietelements 5 erfassen. Hierdurch wird eine Kontrolle der Nietelemente 5 ermöglicht, welche weiter unten näher beschrieben werden soll.

Vom Abgreifbereich 11 werden die Nietelemente 5 mittels der Handhabungseinheit 7, vorzugsweise einzeln, der Nietelementaufnahme 12 ausgerichtet, insbesondere lagegesichert, zugeführt und von der Nietelementaufnahme 12 ausgerichtet, vorzugsweise lagegesichert aufgenommen. Es kann nur eine Nietelementaufnahme 12 vorgesehen sein, vorzugsweise sind jedoch mehrere Nietelementaufnahmen 12 vorgesehen. Im Ausführungsbeispiel sind vier Nietelementaufnahmen 12 gezeigt.

Die Nietelementaufnahme 12 weist bzw. die Nietelementaufnahmen 12 weisen hier und vorzugsweise einen, insbesondere jeweils einen, Zwischenspeicher 28 zum Zwischenspeichern von Nietelementen 5 auf. Sind mehrere Zwischenspeicher 28 vorgesehen, bilden diese vorzugsweise eine Zwischenspeicheranordnung. Auch im Zwischenspeicher 28 werden die Nietelemente 5 hier und vorzugsweise ausgerichtet, insbesondere lagegesichert, gespeichert.

Vorzugsweise weist der Zwischenspeicher 28 mindestens einen oder mindestens zwei Schieber 29, 30 zum Blockieren oder Freigeben von Nietelementen 5 zur Förderung zur Nietmaschine 2, insbesondere zum Nietwerkzeug 2c, auf. Zwei Schieber 29, 30 ermöglichen ein ganz einfaches Freigeben genau eines Nietelements zur Zeit zur Förderung zur Nietmaschine 2.

Ferner kann der Zwischenspeicher 28 Füllstandssensoren 31a aufweisen. Hier und vorzugsweise ist ein Füllstandssensor 31a vorgesehen, welcher das Erreichen eines vorbestimmten Füllstands erfasst, und/oder es ist ein Füllstandssensor 31a vorgesehen, welcher das Unterschreiten eines vorbestimmten Füllstands des Zwischenspeichers 28 erfasst. Die Steuerung 23 steuert vorzugsweise die Nietelementbereitstellungseinheit 6, zumindest auch basierend auf dem Füllstand des Zwischenspeichers 28. Im Ausführungsbeispiel sind die Füllstandssensoren 31a verschieblich am Zwischenspeicher 28 angeordnet, so dass das zu erfassende Füllstandsnievau verstellt werden kann.

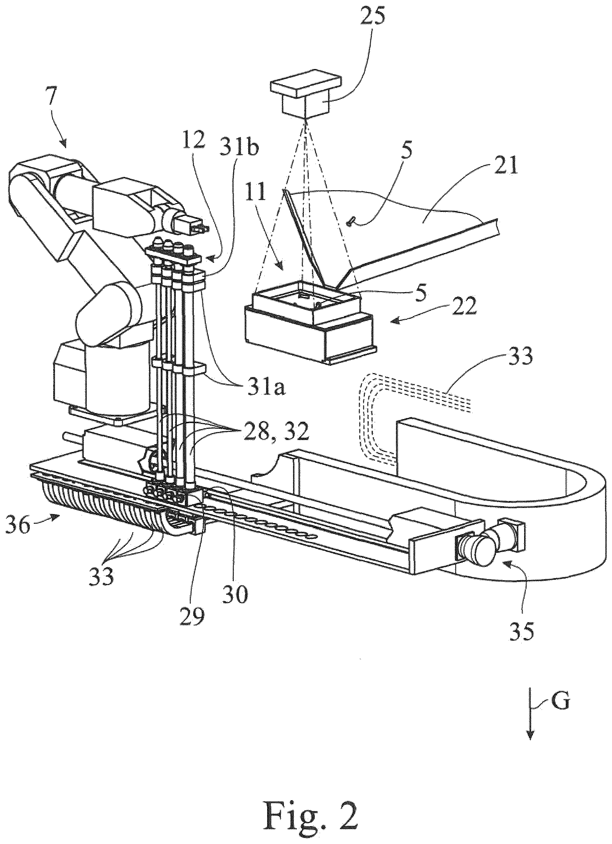

Im Ausfiihrungsbeispiel der Fig. 2 und 3 und vorzugsweise ist der Zwischenspeicher 28 schlauchartig und/oder rohrartig ausgebildet. Dies ist in der Fig. 2 gezeigt, wo die Zwischenspeicher 28 durch Schläuche 32 gebildet werden. Die Füllstandssensoren 31 sind hier als induktive Ringsensoren ausgebildet. In diesem Ausführungsbeispiel werden die Nietelemente 5 von der bzw. den Nietelementaufnahmen 12 aufgenommen und anschließend dem Zwischenspeicher 28 zugeführt.

Auch im Ausführungsbeispiel der Fig. 5 ist ein Zwischenspeicher 28 vorgesehen. Hier wird ein Nietelement 5 entweder direkt vom Abgreifbereich 11 der Nietelementaufnahme 12 zugeführt oder das Nietelement 5 wird zunächst dem Zwischenspeicher 28 zugeführt. Nachdem es dem Zwischenspeicher 28 zugeführt wurde, kann es zu einem späteren Zeitpunkt, insbesondere wenn es gebraucht wird, dem Zwischenspeicher 28 entnommen und der Nietelementaufnahme 12 zugeführt werden.

Der Zwischenspeicher 28 weist einen oder mehrere Nietelementspeicherplätze 28a für einzelne Nietelemente 5 auf, insbesondere zum einzelnen lagegesicherten Speichern der Nietelemente 5. Hier kann die Handhabungseinheit 7 die Nietelementspeicherplätze 28a einzeln befiillen und/oder von den Nietelementspeicherplätzen 28a Nietelemente 5 einer Nietelementaufnahme 12 zuführen, insbesondere zum Weitertransport zum Endeffektor 2b. Der Zwischenspeicher 28 ist hier flach ausgebildet.

Vorzugsweise wird in einem Speicher der Steuerung 23 abgespeichert, welches Nietelement 5 bzw. welcher Typ Nietelement 5 auf welchem Nietelementspeicherplatz 28a abgelegt wurde. Hierdurch kann auf einfache Art und Weise bei Bedarf das Nietelement 5 von der Handhabungseinheit 7 entnommen und der Nietelementaufnahme 12 zum Weitertransport zum Endeffektor 2b zugeführt werden.

Im Ausführungsbeispiel der Fig. 5 sind verschiedenen Nietelementspeicherplätze 28a in einem Nietelementspeichermodul 28b zusammengefasst. Hier und vorzugsweise sind diese Nietelementaufnahmemodule 28b boxartig, vorzugsweise nach oben offen, und/oder austauschbar ausgebildet. Die dort abgelegten Nietelemente 5 können dann durch den Austausch des Nietelementaufnahmemoduls 28b einfach ausgetauscht und/oder entfernt werden. Der Boden des Nietelementaufnahmemoduls 28b weist vorzugsweise ein im Querschnitt wellenartiges Profil auf. Im Ausführungsbeispiel ist es im Querschnitt nach Art einer Dreieckwelle ausgebildet.

Die Sensoranordnung 24 kann ferner zum Erkennen von Lage und Ausrichtung der Nietelemente 5 im Zwischenspeicher 28 einen, insbesondere optischen, Sensor 28c aufweisen. Dieser erfasst vorzugsweise mehrere Nietelementaufnahmemodule 28b.

Ferner kann ein Übergabesensor 31b vorgesehen sein, welcher das Übergeben eines Nietelements 5 an die Nietelementaufnahme 12 erfasst. Hierbei handelt es sich vorzugsweise um einen induktiven Ringsensor. Dieser erfasst hier und vorzugsweise das Einfallen eines Nietelements 5 in den Zwischenspeicher 28.

Der Weitertransport der Nietelemente 5 zur Nietmaschine 2 erfolgt hier und vorzugsweise, zumindest teilweise, schlauchgebunden. Hierfür verläuft ein Schlauch 33 bzw. verlaufen Schläuche 33 von der Nietelementaufnahme 12 bzw. den Nietelementaufnahmen 12 zur Nietmaschine 2. Diese bilden eine Transportstrecke für die Nietelemente 5. Wie bereits erwähnt, erfolgt zumindest ein Teil der Transportstrecke von der Nietelementaufnahme 12 zur Nietmaschine 2, insbesondere der Verstelleinheit und/oder dem Endeffektor, schlauchgebunden.

Zum lagegesicherten Transport unterschiedlicher Nietelemente 5 weisen die Zwischenspeicher 28 und/oder Schläuche 33 hier und vorzugsweise zumindest zum Teil unterschiedlich große Innendurchmesser auf.

Auf der Transportstrecke von der Nietelementaufnahme 12 bzw. dem Zwischenspeicher 28 kann ferner eine Nietweiche 34 vorgesehen sein, diese ermöglicht es, einer Nietelementaufnahme 12 verschiedene Schläuche 33 zum Transport von Nietelementen 5 zur Nietmaschine 2 zuzuordnen. Hierzu weist die Nietweiche 34 hier und vorzugsweise einen Linearantrieb 35 zum Verfahren eines Weichenschlittens 36 auf. Hier ist der Linearantrieb 35 als Elektromotor mit einem Spindel-Spindelmutter-Getriebe ausgebildet.

Mit diesem kann der Weichenschlitten 36 relativ zu den Nietelementaufnahmen 12 verfahren werden, um einen Schlauch 33 einer jeweiligen Nietelementaufnahme 12 zuzuordnen.

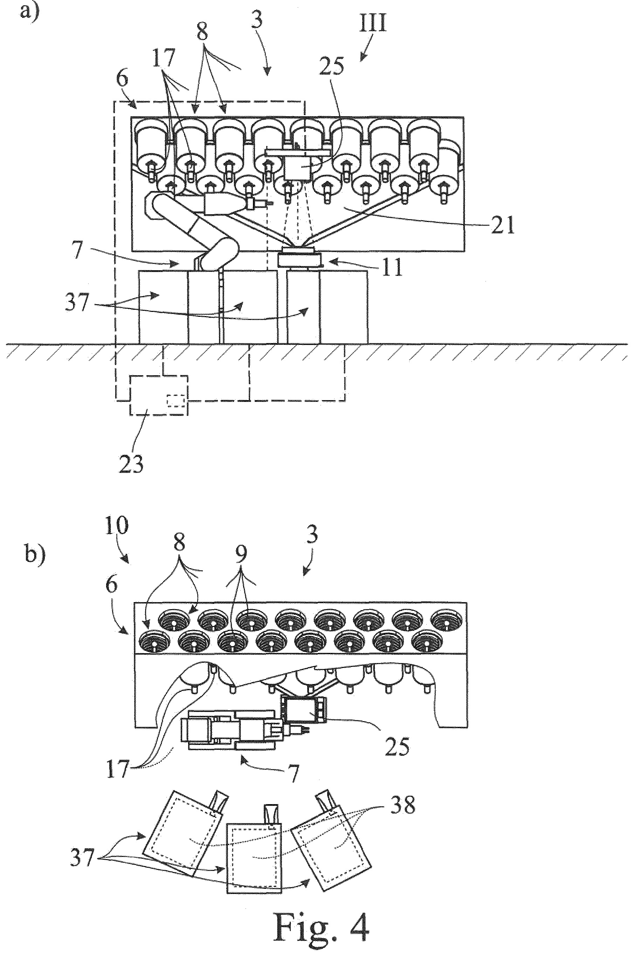

In dem Ausführungsbeispiel der Fig. 4 ist die Nietelementversorgungseinheit 3 Bestandteil einer Nietbeladestation 1a. Auch hier werden die Nietelemente 5 vorzugsweise zumindest teilweise auf der Transportstrecke von dem Abgreifbereich 11 zu einer Nietelementaufnahme 12 mittels der Handhabungseinheit 7 transportiert.

Hier und vorzugsweise weist die Nietbeladestation la dann eine Nietkassettenaufnahme 37 oder mehrere Nietkassettenaufnahmen 37 zur Aufnahme einer Nietkassette 38 oder mehrerer Nietkassetten 38 auf. Dann weist vorzugsweise die Nietkassettenaufnahme 37 und/oder die Nietkassette 38 die Nietelementaufnahme 12 auf.

Auch hier kann ein Zwischenspeicher zum Zwischenspeichern von Nietelementen vorgesehen sein. Ferner kann auch hier eine Nietweiche vorgesehen sein. Der Zwischenspeicher bzw. die Nietweiche kann dann wie zuvor in Zusammenhang mit der Fertigungsvorrichtung 1 beschrieben ausgebildet sein.

Mittels der Sensoranordnung 24 kann die Steuerung 23 eine Kontrolle der Nietelemente 5 durchführen, bevor sie der Nietmaschine 2, insbesondere bevor sie der Nietelementaufnahme 12, zugeführt werden.

Vorzugsweise kontrolliert die Steuerung 23, ob es sich bei dem Typ um einen in eine der Nietelementaufnahmen 12 zu füllenden Solltyp handelt. Auf diese Weise können einer Nietelementaufnahme 12 bzw. den Nietelementaufnahmen 12 nur solche Nietelemente 5 zugeführt werden, welche dem Solltyp entsprechen.

Vorzugsweise werden vorbestimmte, für den Bohrprozess und/oder Nietprozess relevante Eigenschaften der Nietelemente 5, insbesondere der Nietelemente 5 als solcher, vor der Zuführung zum Endeffektor 2b, insbesondere vor der Zuführung zur Nietelementaufnahme 12, erfasst. Vorzugsweise sind die vorbestimmten, für den Bohrprozess und/oder den Nietprozess relevanten Eigenschaften geometrische Eigenschaften der Nietelemente 5 und die Steuerung 23 misst mittels einer Sensoranordnung 24, insbesondere mittels eines der Sensoranordnung 24 zugeordneten optischen Sensors 25 und/oder einer der Sensoranordnung 24 zugeordneten Prüfeinheit 26, 27 diese Eigenschaften. Dies ermöglicht beim späteren Herstellen der Nietverbindung ein abgestimmtes Bohren und/oder Nieten entsprechend der erfassten Eigenschaften des Nietelements 5 und/oder die Auswahl eines Nietelements 5 passend zu einer vorgenommenen Bohrung. Insbesondere Kopfüberstände eines Nietelements 5 über einen vordefinierten Toleranzbereich hinaus können auf diese Weise bei der Fertigung mittels der Fertigungsvorrichtung 1 wirksam vermieden werden.

Die für den Bohrprozess und/oder Nietprozess relevanten Eigenschaften der Nietelemente 5 sind vorzugsweise diejenigen Eigenschaften, aufgrund denen der Bohrprozess und/oder Nietprozess nietelementspezifisch, insbesondere für Nietelemente 5 gleichen Typs, angepasst wird, bzw. diejenigen Eigenschaften, aufgrund denen das Nietelement 5 gegenüber einem Nietelement 5 gleichen Typs für eine durchgeführte Bohrung ausgewählt wird.

Hier und vorzugsweise können die für den Bohrprozess und/oder den Nietprozess relevanten Eigenschaften die Nietlänge und/oder der Schaftdurchmesser und/oder die Schaftlänge sein. Diese Größen werden hier und vorzugsweise durch die Sensoranordnung 24, insbesondere den auf den Abgreifbereich 11 gerichteten Sensor 25, erfasst. Zur Erfassung von mittels des optischen Sensors 25 zu erfassenden Eigenschaften der Nietelemente 5, insbesondere der Eigenschaften Nietlänge und/oder Schaftdurchmesser und/oder Schaftlänge, führt die Steuerung 23 eine Transformation der optischen Aufnahme durch. Dies ist notwendig, da beispielsweise die Nietköpfe 5d der Nietelemente 5 hier und vorzugsweise eine leichte Schräglage im Abgreifbereich 12 bewirken.

Die Messtoleranz dieser Messung liegt vorzugsweise im Bereich von mindestens 500 µm, weiter vorzugsweise von mindestens 200 µ, weiter vorzugsweise von mindestens 100 µm.

Vorzugsweise kann die Steuerung 23 mittels der Sensoranordnung 24, insbesondere des optischen Sensors 25, die Nietelemente 5 auf eine Beschädigung prüfen. Hier kann beispielsweise erkannt werden, ob der Nietkopf 5d eines Nietelements 5 fehlt. Die Erfassung bzw. Prüfung der Nietelemente 5 mittels des auf den Abgreifbereich 12 gerichteten optischen Sensors 25 erfolgt dabei vorzugsweise vor dem Abgreifen des Nietelements 5 durch die Handhabungseinheit 7.

Wie zuvor beschrieben kann die Fertigungsvorrichtung 1 ferner eine Prüfeinheit 26, 27 oder mehrere Prüfeinheiten 26, 27 zur Erfassung von vorbestimmten, für den Bohrprozess und/oder den Nietprozess relevanten Eigenschaften der Nietelemente 5 aufweisen. Die Prüfeinheit 25, 27 wird hier und vorzugsweise ebenfalls von der Steuerung 23 gesteuert.

Ferner können mit der Prüfeinheit 26, 27 als vorbestimmte, für den Bohrprozess und/oder den Nietprozess relevante Eigenschaften ein Nietkopfdurchmesser und/oder eine Nietkopflänge und/oder ein Winkel eines Nietsenkkopfes und/oder ein Übergangsradius gemessen und erfasst werden. Bei einem Übergangsradius handelt es sich hier und vorzugsweise um einen Radius zwischen zwei Abschnitten eines Nietelements 5, insbesondere zwischen Nietkopf und Schaft eines Niets. Zusätzlich kann ggf. auch der Schaftdurchmesser ermittelt werden. Die Messtoleranz der Messung mit der Prüfeinheit 26, 27 ist vorzugsweise geringer, insbesondere mindestens um den Faktor 10 geringer, als die Messtoleranz bei der Messung mit dem auf den Abgreifbereich 12 gerichteten optischen Sensor 25.

Zudem unterscheiden sich die Messungen mit dem auf die Nietelementbereitstellungseinheit 6 gerichteten optischen Sensor 25 mit der Prüfeinheit 26, 27 vorzugsweise dadurch, dass mit dem auf den Abgreifbereich 12 gerichteten optischen Sensor 25 mehrere Nietelemente 5 gleichzeitig, und insbesondere vollständig, erfasst werden, während mit der Prüfeinheit 26, 27 vorzugsweise nur ein Ausschnitt eines Nietelements 5 erfasst wird.

Im Ausführungsbeispiel sind die Prüfeinheiten 26, 27 als beidseitig telezentrisches System ausgebildet. Dies ermöglicht eine genaue Messung ohne eine genaue Positionierung des Nietelements 5 in der Prüfeinheit 26, 27. Die Messtoleranz der Prüfeinheit 26, 27 liegt vorzugsweise unter +- 5 µm, vorzugsweise unter +- 3 µm, weiter vorzugsweise im Wesentlichen bei +- 2 µm.

## Patentansprüche

1. Nietelementversorgungseinheit zur Bereitstellung von Nietelementen (5), wobei die Nietelementversorgungseinheit (3) eine Nietelementbereitstellungseinheit (6) und eine Handhabungseinheit (7) aufweist, wobei
die Nietelementbereitstellungseinheit (6) zum Fördern der Nietelemente (5) einen Wendelförderer (8) mit einer Längsachse (L) und einer Wendel (9) aufweist, welche sich um die Längsachse (L) erstreckt, wobei der Wendelförderer eine Öffnung aufweist,
wobei die Nietelementbereitstellungseinheit (6) einen Abgreifbereich (11) aufweist, dem der Wendelförderer (8) durch die Öffnung Nietelemente (5) zuführt und von dem die Handhabungseinheit (7) die Nietelemente (5) zum Transport zu einer Nietelementaufnahme (12) abgreift,
**dadurch gekennzeichnet, dass** der Wendelförderer (8) drehangetrieben ist, dass die Wendel (9) einen Steigungswinkel unter 20° aufweist, und dass die Längsachse (L) zur Schwerkraftrichtung (G) in einem Winkel von 15° bis 75° geneigt ist.

2. Nietelementversorgungseinheit nach Anspruch 1, **dadurch gekennzeichnet, dass** die Nietelementbereitstellungseinheit (6) mehrere Wendelförderer (8) mit einer Längsachse (2) aufweist, deren Wendel (9) sich um ihre jeweilige Längsachse (2) erstreckt, wobei die Längsachsen (L) mindestens zweier, vorzugsweise aller, Wendelförderer (8) zur Schwerkraftrichtung (G) geneigt sind, vorzugsweise, dass die Längsachsen (2) mindestens zweier, weiter vorzugsweise aller, Wcndelförderer (8) in dieselbe Richtung geneigt, insbesondere parallel zueinander gerichtet, sind.

3. Nietelementversorgungseinheit nach Anspruch 1 oder 2, **dadurch gekennzeichnet, dass** der Wendelförderer einen Wendeltopf (14) zur Aufnahme von Nietelementen (5) aufweist, in welchem die Wendel (9) angeordnet ist, vorzugsweise, dass der Wendeltopf (14) im Wesentlichen zylinderförmig ausgebildet ist.

4. Nietelementversorgungseinheit nach einem der vorhergehenden Ansprüche, **dadurch gekennzeichnet, dass** der Wendeltopf (14) und die Wendel (9) einstückig ausgebildet sind und/oder dass die Wendel (9) einen im Wesentlichen konstanten Radius (R) aufweist.

5. Nietelementversorgungseinheit nach Anspruch 3 oder Anspruch 4 in Kombination mit Anspruch 3, **dadurch gekennzeichnet, dass** der Wendelförderer (8) eine Wendeltopfaufnahme (15) zur Aufnahme des Wendeltopfes (14) aufweist, vorzugsweise, dass der Wendeltopf (14), insbesondere werkzeuglos, lösbar in der Wendeltopfaufnahme (15) angeordnet ist.

6. Nietelementversorgungseinheit nach Anspruch 3 oder Anspruch 4 in Kombination mit Anspruch 3 oder nach Anspruch 5, **dadurch gekennzeichnet, dass** eine Kupplung (18), insbesondere Klauenkupplung, zur Übertragung einer Drehbewegung von einem Motor (17) auf den Wendeltopf (14) vorgesehen ist, vorzugsweise, dass der Wendelförderer (8) einen Motor (17) aufweist, welcher den Wendeltopf (14) antreibt.

7. Nietelementversorgungseinheit nach Anspruch 5, **dadurch gekennzeichnet, dass** die Wendeltopfaufnahme (15) und/oder der Wendeltopf (14) eine Öffnung (20) zum Zuführen eines Nietelements (5) zum Abgreifbereich aufweisen.

8. Nietelementversorgungseinheit nach einem der vorhergehenden Ansprüche, **dadurch gekennzeichnet, dass** die Nietelementbereitstellungseinheit (6) eine Rutsche (21) aufweist, über welche der Wendelförderer (8) bzw. die Wendelförderer (8) Nietelemente (5) dem Abgreifbereich (11) zuführen.

9. Nietelementversorgungseinheit nach einem der vorhergehenden Ansprüche, **dadurch gekennzeichnet, dass** der Abgreifbereich (11) von einem Rütteltisch (22) gebildet wird.

10. Nietelementversorgungseinheit nach einem der vorhergehenden Ansprüche, **dadurch gekennzeichnet, dass** die Handhabungseinheit (7) ein Roboter ist, vorzugsweise, dass die Handhabungseinheit (7) ein Roboter mit mindestens zwei, weiter vorzugsweise mindestens drei, rotatorischen Achsen ist.

11. Nietelementversorgungseinheit nach einem der vorhergehenden Ansprüche, **dadurch gekennzeichnet, dass** eine Steuerung (23) zur Steuerung der Nietelementbereitstellungseinheit (6) und/oder der Handhabungseinheit (7) vorgesehen ist, vorzugsweise, dass die Steuerung (23) mittels einer Sensoranordnung (24), insbesondere eines optischen Sensors (25), die Position und/oder Ausrichtung der Nietelemente (5) im Abgreifbereich (12) erfasst und dass die Steuerung (23) basierend auf der Position und/oder Ausrichtung der Nietelemente (5) die Handhabungseinheit (7), insbesondere den Roboter, zur Aufnahme der Nietelemente (5) ansteuert.

12. Fertigungsvorrichtung mit einer Nietmaschine (2), insbesondere zum Bearbeiten von Flugzeugstrukturbauteilen, wobei die Fertigungsvorrichtung (1) eine Nietelementversorgungseinheit (3) nach einem der Ansprüche 1 bis 11 und eine Nietelementaufnahme (12) aufweist.

13. Fertigungsvorrichtung nach Anspruch 12, **dadurch gekennzeichnet, dass** die Nietmaschine (2) eine Verstelleinheit (2a) und einen Endeffektor (2b) aufweist, wobei der Endeffektor (2b) ein Nietwerkzeug (2c) aufweist, vorzugsweise, dass der Endeffektor (2b) ein Bohrwerkzeug (2d) und ein Nietwerkzeug (2c) aufweist.

14. Fertigungsvorrichtung nach Anspruch 12 oder 13, **dadurch gekennzeichnet, dass** die Nietelementaufhahme (12) die Nietelemente (5) ausgerichtet, insbesondere lagegesichert, aufnimmt und/oder dass die Nietelementaufhahme (12) einen Zwischenspeicher (28) zum Zwischenspeichern von Nietelementen (5) aufweist.

15. Fertigungsvorrichtung nach einem der Ansprüche 12 bis 14, **dadurch gekennzeichnet, dass** zumindest ein Teil der Transportstrecke von der Nietelementaufnahme (12) zur Nietmaschine (2), insbesondere der Verstelleinheit (2a) und/oder dem Endeffektor (2b), schlauchgebunden erfolgt.

16. Fertigungsvorrichtung nach einem der Ansprüche 12 bis 15, **dadurch gekennzeichnet, dass** auf der Transportstrecke eine Nietweiche (34) vorgesehen ist, vorzugsweise, dass auf der Transportstrecke zwischen der Nietelementaufnahme (12) und der Verstelleinheit (2a) eine Nietweiche (34) vorgesehen ist.

17. Nietbeladestation mit einer Nietelementversorgungseinheit (3) nach einem der Ansprüche 1 bis 11 und einer Nietelementaufnahme (12), wobei die Nietbeladestation (1a) dazu eingerichtet ist, die Nietelemente (5) zumindest teilweise auf der Transportstrecke vom Abgreifbereich (11) zu einer Nietelementaufnahme (12) mittels der Handhabungseinheit (7) zu transportieren.

18. Nietbeladestation nach Anspruch 17, **dadurch gekennzeichnet, dass** die Nietbeladestation (1a) eine Nietkassettenaufnahme (12) zur Aufnahme einer Nietkassette aufweist, vorzugsweise, dass die Nietkassettenaufnahme oder die Nietkassette die Nietelementaufnahme (12) aufweist.

19. Nietbeladestation nach Anspruch 17 oder 18, **dadurch gekennzeichnet, dass** die Nietelementaufnahme (12) die Nietelemente (5) ausgerichtet, insbesondere lagegesichert, aufnimmt und/oder dass die Nietelementaufnahme (12) einen Zwischenspeicher (28) zum Zwischenspeichern von Nietelementen (5) aufweist.

20. Verfahren zum Bereitstellen von Nietelementen mittels einer Nietelementversorgungseinheit nach einem der Ansprüche 1 bis 11, wobei die Nietelemente (5) mittels eines Wendelförderers (8) zu einem Abgreifbereich (11) gefördert und von dem Abgreifbereich (11) von der Handhabungseinheit (7) zum Transport zu einer Nietelementaufnahme (12) abgegriffen werden.

## Claims

1. Rivet element supply unit for providing rivet elements (5), wherein the rivet element supply unit (3) has a rivet element preparation unit (6) and a handling unit (7); wherein the rivet element preparation unit (6) for conveying the rivet elements (5) has a bowl feeder (8) having a longitudinal axis (L) and a spiral (9) which extends about the longitudinal axis (L); wherein the bowl feeder has an opening; wherein the rivet element preparation unit (6) has a picking region (11) to which the bowl feeder (8) feeds rivet elements (5) through the opening, and from which the handling unit (7) picks the rivet elements (5) for transportation to a rivet element receptacle (12), **characterized in that** the bowl feeder (8) is rotationally driven, **in that** the spiral (9) has a gradient angle of less than 20°, and **in that** the longitudinal axis (L) in relation to the direction of gravity (G) is inclined by an angle of 15° to 75°.

2. Rivet element supply unit according to Claim 1, **characterized in that** the rivet element preparation unit (6) has a plurality of bowl feeders (8) having a longitudinal axis (2), the spiral (9) of said bowl feeders (8) extending about the respective longitudinal axis (2) of the latter, wherein the longitudinal axes (L) of at least two, preferably of all, bowl feeders (8) are inclined in relation to the direction of gravity (G), preferably **in that** the longitudinal axes (2) of at least two, furthermore preferably of all, bowl feeders (8) are inclined in the same direction, in particular aligned so as to be co-parallel.

3. Rivet element supply unit according to Claim 1 or 2, **characterized in that** the bowl feeder has a spiral bowl (14) for receiving rivet elements (5), in which the spiral (9) is disposed, preferably **in that** the spiral bowl (14) is configured so as to be substantially cylindrical.

4. Rivet element supply unit according to one of the preceding claims, **characterized in that** the spiral bowl (14) and the spiral (9) are integrally configured, and/or **in that** the spiral (9) has a substantially constant radius (R).

5. Rivet element supply unit according to Claim 3, or Claim 4 in combination with Claim 3, **characterized in that** the bowl feeder (8) has a spiral bowl receptacle (15) for receiving the spiral bowl (14), preferably **in that** the spiral bowl (14) is disposed in the spiral bowl receptacle (15) so as to be releasable, in particular without tools.

6. Rivet element supply unit according to Claim 3, or Claim 4 in combination with Claim 3, or according to Claim 5, **characterized in that** a clutch (18), in particular a dog clutch, for transmitting a rotating movement from a motor (17) to the spiral bowl (14) is provided, preferably **in that** the bowl feeder (8) has a motor (17) which drives the spiral bowl (14).

7. Rivet element supply unit according to Claim 5, **characterized in that** the spiral bowl receptacle (15) and or the spiral bowl (14) have/has an opening (20) for feeding a rivet element (5) to the picking region.

8. Rivet element supply unit according to one of the preceding claims, **characterized in that** the rivet element preparation unit (6) has a chute (21) by way of which the bowl feeder (8), or the bowl feeders (8), feeds/feed rivet elements (5) to the picking region (11).

9. Rivet element supply unit according to one of the preceding claims, **characterized in that** the picking region (11) is formed by a vibrating table (22).

10. Rivet element supply unit according to one of the preceding claims, **characterized in that** the handling unit (7) is a robot, preferably **in that** the handling unit (7) is a robot with at least two, furthermore preferably at least three, rotary axes.

11. Rivet element supply unit according to one of the preceding claims, **characterized in that** a controller (23) for controlling the rivet element preparation unit (6) and/or the handling unit (7) is provided, preferably **in that** the controller (23) by means of a sensor assembly (24), in particular an optical sensor (25), detects the position and/or orientation of the rivet elements (5) in the picking region (12), and **in that** the controller (23) based on the position and/or orientation of the rivet elements (5) actuates the handling unit (7), in particular the robot, for receiving the rivet elements (5).

12. Manufacturing device having a riveting machine (2), in particular for machining structural aircraft components, wherein the manufacturing device (1) has a rivet element supply unit (3) according to one of Claims 1 to 11, and a rivet element receptacle (12).

13. Manufacturing device according to Claim 12, **characterized in that** the riveting machine (2) has an adjustment unit (2a) and an end effector (2b), wherein the end effector (2b) has a riveting tool (2c), preferably **in that** the end effector (2b) has a drilling tool (2d) and a riveting tool (2c).

14. Manufacturing device according to Claim 12 or 13, **characterized in that** the rivet element receptacle (12) receives the rivet elements (5) so as to be oriented, in particular positionally secured, and/or **in that** the rivet element receptacle (12) has a buffer store (28) for temporarily storing rivet elements (5).

15. Manufacturing device according to one of Claims 12 to 14, **characterized in that** at least part of the transport section from the rivet element receptacle (12) to the riveting machine (2), in particular the adjustment unit (2a) and/or the end effector (2b), is performed by a hose connection.

16. Manufacturing device according to one of Claims 12 to 15, **characterized in that** a rivet turnout (34) is provided on the transport section, preferably **in that** a rivet turnout (34) is provided on the transport section between the rivet element receptacle (12) and the adjustment unit (2a).

17. Rivet loading station having a rivet element supply unit (3) according to one of Claims 1 to 11, and a rivet element receptacle (12), wherein the rivet loading station (1a) by means of the handling unit (7) is specified to transport the rivet elements (5) at least partially on the transport section from the picking region (11) to a rivet element receptacle (12) .

18. Rivet loading station according to Claim 17, **characterized in that** the rivet loading station (1a) has a rivet cassette receptacle (12) for receiving a rivet cassette, preferably **in that** the rivet cassette receptacle or the rivet cassette comprises the rivet element receptacle (12).

19. Rivet loading station according to Claim 17 or 18, **characterized in that** the rivet element receptacle (12) receives the rivet elements (5) so as to be oriented, in particular positionally secured, and/or **in that** the rivet element receptacle (12) has a buffer store (28) for temporarily storing rivet elements (5).

20. Method for providing rivet elements by means of a rivet element supply unit according to one of Claims 1 to 11, wherein the rivet elements (5) by means of a bowl feeder (8) are conveyed to a picking region (11), and for transportation to a rivet element receptacle (12) are picked from the picking region (11) by the handling unit (7).

## Revendications

1. Unité d'approvisionnement en éléments de rivetage servant à la fourniture d'éléments de rivetage (5), l'unité d'approvisionnement en éléments de rivetage (3) présentant une unité de fourniture d'éléments de rivetage (6) et une unité de manipulation (7),
l'unité d'approvisionnement en éléments de rivetage (6) présentant un convoyeur en spirale (8) doté d'un axe longitudinal (L) et d'une spirale (9) pour le convoyage des éléments de rivetage (5), laquelle spirale s'étend autour de l'axe longitudinal (L), le convoyeur en spirale présentant une ouverture,
l'unité de fourniture d'éléments de rivetage (6) présentant une région de prélèvement (11) à laquelle le convoyeur en spirale (8) achemine des éléments de rivetage (5) à travers l'ouverture et à partir de laquelle l'unité de manipulation (7) prélève les éléments de rivetage (5) pour le transport jusqu'à un récipient d'éléments de rivetage (12),
**caractérisée en ce que** le convoyeur en spirale (8) est entraîné en rotation, **en ce que** la spirale (9) présente un angle de pente inférieur à 20°, et **en ce que** l'axe longitudinal (L) est incliné suivant un angle de 15° à 75° par rapport à la direction de la gravité (G).

2. Unité d'approvisionnement en éléments de rivetage selon la revendication 1, **caractérisée en ce que** l'unité de fourniture d'éléments de rivetage (6) présente plusieurs convoyeurs en spirale (8) dotés d'un axe longitudinal (2), dont la spirale (9) s'étend autour de son axe longitudinal (2) respectif, les axes longitudinaux (L) d'au moins deux, de préférence de tous les convoyeurs en spirale (8) étant inclinés par rapport à la direction de la gravité (G), de préférence **en ce que** les axes longitudinaux (2) d'au moins deux, plus préférablement de tous les convoyeurs en spirale (8) sont inclinés dans la même direction, en particulier parallèlement les uns aux autres.

3. Unité d'approvisionnement en éléments de rivetage selon la revendication 1 ou 2, **caractérisée en ce que** le convoyeur en spirale présente un pot de spirale (14) servant à la réception d'éléments de rivetage (5), dans lequel la spirale (9) est disposée, de préférence **en ce que** le pot de spirale (14) est de forme sensiblement cylindrique.

4. Unité d'approvisionnement en éléments de rivetage selon l'une des revendications précédentes, **caractérisée en ce que** le pot de spirale (14) et la spirale (9) sont formés d'une seule pièce et/ou **en ce que** la spirale (9) présente un rayon (R) sensiblement constant.

5. Unité d'approvisionnement en éléments de rivetage selon la revendication 3 ou la revendication 4 en association avec la revendication 3, **caractérisée en ce que** le convoyeur en spirale (8) présente un logement de pot de spirale (15) servant au logement du pot de spirale (14), de préférence **en ce que** le pot de spirale (14) est disposé de manière amovible, en particulier sans outil, dans le logement de pot de spirale (15).

6. Unité d'approvisionnement en éléments de rivetage selon la revendication 3 ou la revendication 4 en association avec la revendication 3 ou la revendication 5, **caractérisée en ce qu'**un embrayage (18), en particulier un embrayage à griffes, est prévu pour la transmission d'un mouvement rotatif d'un moteur (17) au pot de spirale (14), de préférence **en ce que** le convoyeur en spirale (8) présente un moteur (17), lequel entraîne le pot de spirale (14).

7. Unité d'approvisionnement en éléments de rivetage selon la revendication 5, **caractérisée en ce que** le logement de pot de spirale (15) et/ou le pot de spirale (14) présente(nt) une ouverture (20) servant à l'acheminement d'un élément de rivetage (5) jusqu'à la région de prélèvement.

8. Unité d'approvisionnement en éléments de rivetage selon l'une des revendications précédentes, **caractérisée en ce que** l'unité de fourniture d'éléments de rivetage (6) présente une goulotte (21), par le biais de laquelle le convoyeur en spirale (8) ou les convoyeurs en spirale (8) acheminent des éléments de rivetage (5) à la région de prélèvement (11).

9. Unité d'approvisionnement en éléments de rivetage selon l'une des revendications précédentes, **caractérisée en ce que** la région de prélèvement (11) est formée par une table vibrante (22).

10. Unité d'approvisionnement en éléments de rivetage selon l'une des revendications précédentes, **caractérisée en ce que** l'unité de manipulation (7) est un robot, de préférence **en ce que** l'unité de manipulation (7) est un robot doté d'au moins deux, plus préférablement d'au moins trois axes rotatifs.

11. Unité d'approvisionnement en éléments de rivetage selon l'une des revendications précédentes, **caractérisée en ce qu'**une commande (23) servant à la commande de l'unité de fourniture d'éléments de rivetage (6) et/ou de l'unité de manipulation (7) est prévue, de préférence **en ce que** la commande (23) détecte, au moyen d'un ensemble de détection (24), en particulier d'un capteur optique (25), la position et/ou l'orientation des éléments de rivetage (5) dans la région de prélèvement (12) et **en ce que** la commande (23), sur la base de la position et/ou de l'orientation des éléments de rivetage (5), commande l'unité de manipulation (7), en particulier le robot, pour la réception des éléments de rivetage (5).

12. Dispositif de fabrication doté d'une machine à river (2), en particulier pour le traitement de composants structuraux d'aéronef, le dispositif de fabrication (1) présentant une unité d'approvisionnement en éléments de rivetage (3) selon l'une des revendications 1 à 11 et un récipients d'éléments de rivetage (12).

13. Dispositif de fabrication selon la revendication 12, **caractérisé en ce que** la machine à river (2) présente une unité de réglage (2a) et un effecteur terminal (2b), l'effecteur terminal (2b) présentant un outil de rivetage (2c), de préférence **en ce que** l'effecteur terminal (2b) présente un outil de perçage (2d) et un outil de rivetage (2c) .

14. Dispositif de fabrication selon la revendication 12 ou 13, **caractérisé en ce que** le récipient d'éléments de rivetage (12) oriente les éléments de rivetage (5), en particulier fixe leur position, les reçoit et/ou **en ce que** le récipient d'éléments de rivetage (12) présente un dispositif de stockage intermédiaire (28) servant au stockage intermédiaire d'éléments de rivetage (5).

15. Dispositif de fabrication selon l'une des revendications 12 à 14, **caractérisé en ce qu'**au moins une partie de la voie de transport du récipient d'éléments de rivetage (12) à la machine à river (2), en particulier à l'unité de réglage (2a) et/ou à l'effecteur terminal (2b), est raccordée par tuyau.

16. Dispositif de fabrication selon l'une des revendications 12 à 15, **caractérisé en ce qu'**un dispositif d'aiguillage de rivets (34) est prévu sur la voie de transport, de préférence **en ce qu'**un dispositif d'aiguillage de rivets (34) est prévu sur la voie de transport entre le récipient d'éléments de rivetage (12) et l'unité de réglage (2a).

17. Station de chargement de rivets comprenant une unité d'approvisionnement en éléments de rivetage (3) selon l'une des revendications 1 à 11 et un récipient d'éléments de rivetage (12), la station de chargement de rivets (1a) étant conçue pour transporter les éléments de rivetage (5) au moins partiellement sur la voie de transport à partir de la région de prélèvement (11) jusqu'à un récipient d'éléments de rivetage (12) au moyen de l'unité de manipulation (7).

18. Station de chargement de rivets selon la revendication 17, **caractérisée en ce que** la station de chargement de rivets (1a) présente un logement de cassette de rivets (12) servant au logement d'une cassette de rivets, de préférence **en ce que** le logement de cassette de rivets ou la cassette de rivets présente le récipient d'éléments de rivetage (12).

19. Station de chargement de rivets selon la revendication 17 ou 18, **caractérisée en ce que** le récipient d'éléments de rivetage (12) oriente les éléments de rivetage (5), en particulier fixe leur position, les reçoit et/ou **en ce que** le récipient d'éléments de rivetage (12) présente un dispositif de stockage intermédiaire (28) servant au stockage intermédiaire d'éléments de rivetage (5).

20. Procédé de fourniture d'éléments de rivetage au moyen d'une unité d'approvisionnement en éléments de rivetage selon l'une des revendications 1 à 11, les éléments de rivetage (5) étant convoyés au moyen d'un convoyeur en spirale (8) jusqu'à une région de prélèvement (11) et, à partir de la région de prélèvement (11), prélevés par l'unité de manipulation (7) pour le transport jusqu'à un récipient d'éléments de rivetage (12) .
